# EUROPÄISCHE PATENTSCHRIFT

(11) **EP 3 447 439 B1**
(45) Veröffentlichungstag und Bekanntmachung des Hinweises auf die Patenterteilung: **22.05.2019**
(21) Anmeldenummer: 17187843.2
(22) Anmeldetag: 24.08.2017
(51) Int. Cl.: G01B 3/14, B23P 19/04

(54) **LEHRE ZUR VERKÖRPERUNG EINES GEOMETRISCHEN BEZUGSVERLAUFS, SOWIE VERWENDUNGEN EINER DERARTIGEN LEHRE**
TEMPLATE FOR REPRESENTING A GEOMETRIC REFERENCE CURVE, AND USES OF SUCH A TEMPLATE
GABARIT PERMETTANT LA REPRÉSENTATION D'UNE COURBE GÉOMÉTRIQUE DE RÉFÉRENCE ET UTILISATIONS D'UN TEL GABARIT

(43) Veröffentlichungstag der Anmeldung: 27.02.2019
(73) Patentinhaber: Modellbau Mayer GmbH, 86666 Burgheim (DE)
(72) Erfinder: Mayer, Ernst, 86633 Neuburg/Donau (DE)
(74) Vertreter: Roos, Peter

(56) Entgegenhaltungen:
- DE-A1- 4 111 768
- DE-A1- 19 535 681
- FR-A1- 2 812 267
- US-A- 250 835
- US-A- 486 408
- US-A- 1 406 117
- US-A- 2 621 415
- US-A- 2 704 893

## Beschreibung

Die vorliegende Erfindung betrifft eine Lehre zur Verkörperung eines Bezugsverlaufs, also eine Vorrichtung, die als ein "Bezugsnormal" für einen vorab festgelegten geometrischen Verlauf (Bezugsverlauf) verwendet werden kann. Ferner betrifft die Erfindung eine Verwendung einer derartigen Lehre.

Eine derartige Lehre kann durch einen Benutzer beispielsweise an einer technischen Einrichtung positioniert werden, um einen tatsächlichen Verlauf ("Istverlauf") eines Bauteils bzw. eines bestimmten Bauteilrandes mit dem vorher festgelegten und durch die Lehre verkörperten Bezugsverlauf ("Sollverlauf") visuell zu vergleichen, etwa im Bereich der Qualitätssicherung bei der Herstellung bzw. Montage von technischen Einrichtungen.

Aus dem Stand der Technik sind Lehren zur Verkörperung eines Bezugsverlaufs, oftmals auch als Form- oder Beschnittlehren bezeichnet, in vielfältigen Ausführungen bekannt. In vielen Anwendungsbereichen wie z. B. dem Maschinen- und Anlagenbau sind Lehren üblicherweise aus gehärtetem Stahl hergestellt, wobei die zur Verkörperung des Bezugsverlaufs relevanten Flächen oftmals noch nachbearbeitet (z. B. feingeschliffen) sind.

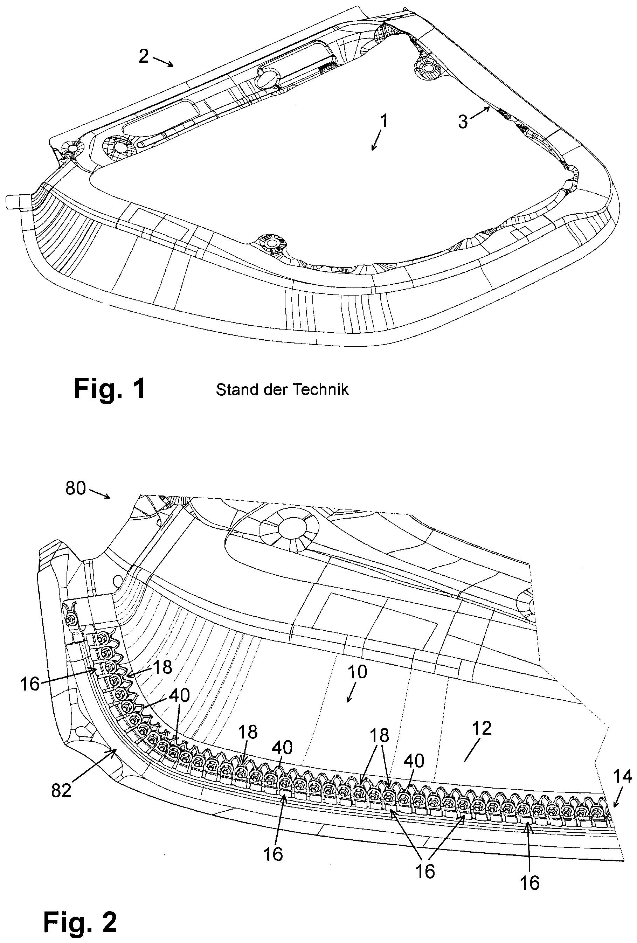

Fig. 1 veranschaulicht beispielhaft die Verwendung einer Lehre 1 von herkömmlicher Bauart zum Prüfen einer Fahrzeugtür (hier: PKW-Tür) 2. Die Lehre 1 besteht aus einem plattenförmigen Lehrenkörper, wobei der Verlauf dessen Randes 3, oder zumindest ein Teil dieses Randverlaufs, den von der Lehre 1 verkörperten Bezugsverlauf definiert.

Wenn diese Lehre 1, wie in Fig 1. gezeigt, in vorbestimmter Weise positioniert an der Fahrzeugtür 2 aufgelegt wird, so kann in einfacher und rascher Weise wenigstens ein bestimmter tatsächlicher Verlauf an der Fahrzeugtür 2 bzw. an einem Bauteil derselben mit dem entsprechenden Bezugsverlauf der Lehre 1 visuell verglichen werden, beispielsweise um die Fahrzeugtür 2 als Gutteil oder Schlechtteil zu klassifizieren.

Wenngleich eine Lehre der in Fig. 1 gezeigten Art z. B. zur Überprüfung der Maßhaltigkeit bestimmter Blechoberflächen bzw. Blechkanten an der Tür 2 eingesetzt werden kann, so dient die Lehre 1 im dargestellten Beispiel zur Überprüfung des Verlaufs eines an der Tür 2 montierten (jedoch in Fig. 1 nicht dargestellten) Türdichtungsprofils, wobei ein Sollverlauf eines dem Rand 3 der Lehre 1 zugewandten Dichtungsprofilrandes geringfügig (z. B. um 1 mm oder 2 mm) von dem durch den Lehrenrand 3 definierten Bezugsverlauf beabstandet sein kann, um bei der visuellen Prüfung etwaige lokale Abweichungen des Istverlaufs vom Sollverlauf des Dichtungsprofils in beiden Richtungen (Verlauf zu weit innen, Verlauf zu weit aussen) gut erkennen und bewerten zu können.

Bei einer bekannten Lehre der in Fig. 1 veranschaulichten Art besteht ein Nachteil insbesondere darin, dass für jeden konkreten vorab festgelegten Bezugsverlauf eigens eine entsprechend formgestaltete Lehre gefertigt werden muss.

In der Praxis des in Fig. 1 veranschaulichten Anwendungsbereiches einer industriellen Serienfertigung von Fahrzeugtüren kann es vorkommen, dass während der Entwicklung und/oder später in der laufenden Produktion ein und desselben Türentyps der Sollverlauf des Türdichtungsprofils geringfügig geändert wird. Eine zuvor gefertigte Lehre taugt dann nicht mehr zur Überprüfung des geänderten Sollverlaufs, was oftmals die erneute Anfertigung einer passenden Lehre erfordert.

Lehren nach dem Oberbegriff des Anspruchs 1 sind aus den Veröffentlichungen US 250 835 A und US 1 406 117 A bekannt. Diese bekannten Lehren sind jeweils zur Verwendung im Holzschiffbau vorgesehen, um damit an einem bestehenden Schiffsrumpf Maß zu nehmen bzw. die Lehre einzustellen, und dann die eingestellte Lehre als eine Schablone beim Sägen von Hölzern zum Bau eines neuen Schiffes zu verwenden. Die Lehren weisen jeweils einen langgestreckten Balken (Basiskörper) sowie eine Reihe von demgegenüber querverlaufenden langgestreckten geschlitzten Armen (Elemente) auf. Die Arme, deren Positionen den von der Lehre verkörperten Bezugsverlauf definieren, sind hierbei über den Längsbalken gelegt (US 250 835 A) bzw. durchsetzen einen in dem Längsbalken ausgebildeten Schlitz (US 1 406 117 A) und können mittels der in den Armen ausgebildeten Schlitze bezüglich jeweiliger an dem Längsbalken angeordneter Klemmschrauben eingestellt werden. Die Klemmschrauben sind hierbei wiederum in einem im Längsrichung des Balkens verlaufenden Schlitz des Balkens in Längsposition einstellbar.

Mit derartigen bekannten "einstellbaren Lehren" ist die weiter oben erläuterte Problematik bei der Verwendung der Lehren beseitigt bzw. zumindest abgemildert, da Veränderungen eines von der Lehre zu verkörpernden Bezugsverlaufs nicht zwangsläufig Kosten zur Anfertigung neuer (passender) Lehren verursachen.

Nachteilig ist jedoch auch bei diesen bekannten Lehren deren relativ aufwendige Fertigung, Handhabung und Einstellung.

Aus der Veröffentlichung DE 41 11 768 A1 ist eine Vorrichtung zur komplexen Prüfung großflächiger Blechformteile bekannt. Die Vorrichtung weist unter anderem eine analog zum prüfenden Blechformteil ausgebildete Schablone sowie Sensor- und Fixiereinheiten auf, die sich nach Anordnung der Schablone an einem Blechformteil in den zwischen Schablone und Blechformteil sich ergebenden Freiräumen befinden.

Aus der Veröffentlichung DE 195 35 681 A1 ist eine Hilfsvorrichtung zum Befestigen eines Dichtstreifens z. B. an einer Fahrzeugtür bekannt. Die Vorrichtung weist mehrere Führungsteile auf, die an der betreffenden Einrichtung (z. B. Fahrzeugtür) angelegt werden. Zur gegenseitigen Verbindung der Führungsteile sind strangartige Teile vorbestimmter Länge vorgesehen.

Aus der Veröffentlichung US 2,704,893 A ist eine einstellbare Zeichenschablone bekannt, die ein flexibles "Spline"-Element aufweist, dessen Verlauf durch eine Mehrzahl daran angelenkter Zylindereinheiten verstellbar ist.

Aus der Veröffentlichung US 2,621,415 A ist eine Konturtransfervorrichtung bekannt, bei der eine langgestreckte Gehäuseanordnung von einer Mehrzahl von querverlaufenden Fingern durchsetzt wird, deren Positionen einstellbar sind und die durch einen Klemmmechanismus in der Gehäuseanordnung fixiert werden können.

Aus der Veröffentlichung FR 2 812 267 A1 ist eine Vorrichtung zum Verkleben einer Dichtung, wie z. B. einer Dichtung an einem Öffnungsrahmen einer Kraftfahrzeugtür, bekannt. Die Vorrichtung weist ein bevorzugt verformbar ausgebildetes Profil auf, an dem die betreffende Dichtung befördert werden kann, wobei für die Beförderung der Dichtung in ihre endgültige Verlegeposition das Profil mittels einer Reihe von am Profil angelenkten Aktuatorköpfen bewegt werden kann.

Es ist eine Aufgabe der vorliegenden Erfindung, die Fertigung von Lehren der gattungsgemäßen Art sowie die Handhabung und Einstellung bei der Verwendung derartiger Lehren zu vereinfachen.

Gemäß eines ersten Aspekts der Erfindung wird diese Aufgabe durch eine Lehre nach Anspruch 1 gelöst. Die abhängigen Ansprüche betreffen vorteilhafte Weiterbildungen der Erfindung. Die erfindungsgemäße Lehre ermöglicht in vorteilhafter und einfacher Weise eine Veränderung des damit verkörperten Bezugsverlaufs, indem die Elemente, deren Positionen bezüglich des Basiskörpers den Bezugsverlauf definieren, in entsprechender Weise bezüglich des Basiskörpers verstellt und sodann wieder fixiert werden.

Der plattenförmige Basiskörper kann z. B. eine einheitliche Dicke besitzen und je nach Anwendungsfall z. B. eben oder uneben sein. Bevorzugt ist der Basiskörper einstückig ausgebildet. Der Basiskörper kann z. B. aus einem metallischen Material oder z. B. aus einem Faserverbundmaterial (z. B. CFK, GFK etc.) gebildet sein. Der Rand des Basiskörpers kann nachbearbeitet (z. B. gefräst, geschliffen etc.) sein.

In einer nicht beanspruchten Ausführungsform ist der Basiskörper als ein Faserverbundbauteil enthaltend ein multiaxiales Fasergelege (z. B. aus Kohlenstoff- oder Glasfasern) in einer Kunststoffmatrix (z. B. Epoxidharz) ausgebildet. Ein derartiger Basiskörper kann z. B. im Handlaminierverfahren sehr vorteilhaft auch mit komplizierterer unebener Formgestaltung hergestellt werden.

In einer nicht beanspruchten Ausführungsform besitzt der plattenförmige Basiskörper eine Fläche (gemessen auf einer seiner beiden Flachseiten) von mindestens 0,2 m², insbesondere mindestens 0,5 m². In einer Ausführungsform beträgt diese Fläche andererseits höchstens 2 m², insbesondere höchstens 1 m². Die Dicke des Basiskörpers liegt gemäß einer nicht beanspruchten Ausführungsform im Bereich von 0,2 mm bis 20 mm, bevorzugt im Bereich von 0,4 mm bis 10 mm, wobei insbesondere eine über die Fläche des Basiskörpers im Wesentlichen einheitliche Dicke vorgesehen sein kann.

Im Hinblick auf eine spätere Positionierung der Lehre an einer technischen Einrichtung (z. B. Fahrzeugtür) kann die Lehre vorteilhaft mit Hilfsmitteln zur Vereinfachung dieser Positionierung ausgestattet sein.

Als derartiges Hilfsmittel kommen z. B. ein oder mehrere speziell formgestaltete Anlageabschnitte des Basiskörpers in Betracht, die zum Positionieren der Lehre an einer oder mehreren hierfür vorgesehen Stellen der technischen Einrichtung zur Anlage gebracht werden. Jeder Anlageabschnitt kann z. B. eine lokale Erhabenheit oder Ausbuchtung des Basiskörpers auf dessen in der Positionierungsituation der technischen Einrichtung zugewandten Seite umfassen.

In einer nicht beanspruchten Ausführungsform sind z. B. drei derartige Anlageabschnitte des Basiskörpers vorgesehen, so dass vorteilhaft eine stabile Positionierung auf einem von den Anlageabschnitten gebildeten "Dreibein" bewerkstelligt werden kann.

Alternativ oder zusätzlich kommen als Hilfsmittel eine oder mehrere Ausrichtöffnungen (z. B. Ausrichtbohrungen) des Basiskörpers in Betracht. Beim Positionieren der Lehre an der betreffenden Einrichtung (z. B. Fahrzeugtür) kann jede derartige Ausrichtöffnung an einer hierfür vorgesehen Stelle der technischen Einrichtung angeordnet ("zentriert") werden. Dies kann z. B. erfolgen, indem ein an der betreffenden Stelle der technischen Einrichtung temporär oder dauerhaft vorgesehener Zentrierzapfen mit der Ausrichtöffnung der Lehre zum Eingriff gebracht wird, oder z. B. indem an der Stelle ebenfalls eine Ausrichtöffnung vorgesehen ist, so dass z. B. mittels eines Werkzeuges (Zentrierstift oder dergleichen) die Ausrichtöffnungen einerseits der Lehre und andererseits der technischen Einrichtung koaxial zueinander ausgerichtet werden können).

Alternativ oder zusätzlich kommen als Hilfsmittel ein oder mehrere Magneteinrichtungen in Betracht, um beim Positionieren der Lehre ein Fixieren der Lehre an der technischen Einrichtung durch Magnetkraft zu bewirken. Jede Magneteinrichtung kann z. B. von einem Permanentmagneten gebildet sein, so dass diese Art der Fixierung der Lehre eingesetzt werden kann, wenn die betreffende technische Einrichtung (zumindest an den relevanten Stellen) ein magnetisches Material wie z. B. Stahl aufweist.

Alternativ oder zusätzlich können als Hilfsmittel ein oder mehrere in Anpassung an die konkrete technische Einrichtung konstruierte mechanische Klemmeinrichtungen an der Lehre vorgesehen sein, um bei einem Positionieren der Lehre dieselbe in mechanischer Weise durch Festklemmen an der technischen Einrichtung zu fixieren.

Alternativ oder zusätzlich kann die Lehre auf der in der Positionierungssituation der technischen Einrichtung abgewandten Seite mit wenigstens einem Handgriff versehen sein, um ein manuelles Ausrichten und Andrücken der Lehre zu vereinfachen. Jeder solche Handgriff kann z. B. bügelförmig gestaltet sein. Beisielsweise kann etwa in der Mitte des Basiskörpers (bevorzugt nahe dem Massenmittelpunkt der Lehre) ein Handgriff angeordnet sein.

Die Verkörperung des Bezugsverlaufs ist bei der erfindungsgemäßen Lehre insofern "diskretisiert", als nicht wie bei einer herkömmlichen Lehre gemäß Fig. 1 der Bezugsverlauf durch einen kontinuierlichen Verlauf eines Lehrenkörperrandes sondern durch die Positionen der einzelnen Elemente definiert wird, die in einer entlang eines Randes des Basiskörpers verlaufenden Reihe angeordnet sind.

Der verkörperte Bezugsverlauf kann hierbei als eine gedachte Linie betrachtet werden, welche an den einzelnen Elementen jeweils durch einen "bestimmten Punkt" jedes Elements hindurch verläuft. Was als die an den Elementen "bestimmten Punkte" bei der Anwendung der Lehre verwendet wird ist letztlich eine Frage der Definition. Zumeist zweckmäßig ist es, wenn alle Elemente gleichartig ausgebildet (formgestaltet) sind und/oder z. B. jeweils ein freies Ende (entfernt von den Einstell- und Fixiermitteln) jedes Elements den zur Definition des Bezugsverlaufs bestimmten Punkt enthält bzw. darstellt. Ein gemäß dieser Definition verkörperter Bezugsverlauf verbindet dann gewissermaßen die freien Enden benachbarter Elemente miteinander.

Unter diesem Aspekt ist die bei der erfindungsgemäßen Lehre vorgesehene Ausführung vorteilhaft, bei der freie Enden der Elemente den Rand des plattenförmigen Basiskörpers jeweils überragen, d. h. in der jeweils "lokalen Plattenebene" (am Ort des betreffenden Elements) betrachtet von dem Rand nach außen hin beabstandet sind.

Die Einstell- und Fixiermittel sind gemäß einer Ausführungsform dazu ausgebildet, bei jedem der Elemente einen Elementabschnitt flächig am Rand des Basiskörpers aufliegend anzudrücken um das betreffende Element somit reibschlüssig zu fixieren.

Bei derartigen Einstell- und Fixiermitteln könnte z. B. vorgesehen sein, dass die Andrucckraft durch eine Federeinrichtung (Klemmeinrichtung) bewirkt wird und ein Einstellen der Elemente jeweils unter Überwindung der zwischen Element und Basiskörper wirkenden Haftreibungskraft erfolgt.

Bevorzugt sind die Einstell- und Fixiermittel bei der erwähnten Ausführungsform mit reibschlüssiger Fixierung der Elemente so ausgebildet, dass die Andruckkraft für ein Verstellen eines Elements zunächst verringert werden kann, und nach Einstellung der gewünschten Position des betreffenden Elements die auf dieses Element wirkende Andruckkraft wieder vergrößert werden kann, um das Element in der eingestellten Position zu fixieren.

Eine flächige Auflage des Elementabschnitts an einem Flachseitenabschnitt am Rand des Basiskörpers kann z. B. besonders einfach realisiert sein, indem sowohl der Elementabschnitt als auch der betreffende Flachseitenabschnitt am Rand des Basiskörpers eben ausgebildet sind bzw. zumindest einander zugewandte ebene Kontaktflächen besitzen.

Die Details und insbesondere das Ausmaß der Einstellbarkeit der Elemente können bei der Erfindung dem konkreten Anwendungsfall angepasst gewählt werden. In einer Ausführungsform ist zum Beispiel vorgesehen, dass die Einstell- und Fixiermittel dazu ausgebildet sind, eine Verstellung der Elemente jeweils in wenigstens einer Richtung zu erlauben, wobei in dieser Richtung ein Verstellbereich von z. B. mindestens 2 mm oder z. B. mindestens 5 mm vorgesehen sein kann. Für viele Anwendungsfälle genügt ein Verstellbereich von maximal 2 cm, oftmals auch maximal 1 cm.

Die Einstellbarkeit der Elemente kann insbesondere eine Verschiebbarkeit der Elemente jeweils in wenigstens einer Richtung parallel zu der durch den betreffenden Randbereich des Basiskörpers definierten Plattenebene umfassen.

In vielen Anwendungsfällen ist es vorteilhaft, wenn eine solche Verschiebbarkeit zumindest in einer Richtung quer, insbesondere z. B. orthogonal, zum betreffenden Randabschnitt des Basiskörpers ermöglicht ist. Bei vom Rand des Basiskörpers abstehenden Elementen kann damit der "Überstand" des Elements am Rand des Basiskörpers eingestellt werden.

Alternativ oder zusätzlich kann auch z. B. eine Verschiebbarkeit des Elements parallel zum Randverlauf des Basiskörpers am Ort des Elements und/oder z. B. eine Drehbarkeit des Elements um eine zur Plattenebene am Ort des Elements orthogonale Drehachse vorgesehen sein.

In einer Ausführungsform beinhalten die Einstell- und Fixiermittel an jedem der Elemente eine Verschraubung des betreffenden Elements mit dem Basiskörper.

Mit einer derartigen Verschraubung, für die z. B. eine einzige Schraube genügen kann, kann vorteilhaft besonders einfach die vorerwähnte reibschlüssige Fixierung realisiert sein. Zu diesem Zweck kann z. B. für jedes Element eine Einstell- und Fixierschraube vorgesehen sein, deren Schraubenachse z. B. orthogonal zur Plattenebene im Bereich des betreffenden Elements verläuft und deren Enden sowohl am Element als auch am Basiskörper an dort ausgebildeten Verschraubungsöffnungen eingreifen oder durchgreifen.

Beispielsweise kann eine solche Einstell- und Fixierschraube einen Schraubenkopf aufweisen, der an einer derartigen Öffnung (des Elements oder des Basiskörpers) gehalten wird, wohingegen das andere Schraubenende z. B. mit einem Aussengewinde versehen in ein entsprechendes Innengewinde der anderen Öffnung (des Basiskörpers bzw. des Elements) eingeschraubt ist.

In einer anderen Ausführungsform greift das andere Schraubenende durch die letztere Öffnung hindurch und ist jenseits dieser Öffnung mit dem Aussengewinde in ein Innengewinde einer Schraubenmutter eingeschraubt.

In einer bevorzugten Ausführungsform besitzt die Einstell- und Fixierschraube einen Schraubenkopf, der an einer mit Senkung versehen Öffnung des Basiskörpers gehalten ist und hierbei bevorzugt vollständig im Bereich des Basiskörpers aufgenommen (versenkt) ist. Insbesondere bei dieser Ausführungsform ist bevorzugt vorgesehen, dass die Schraube eine am betreffenden Element ausgebildete Öffnung durchgreift und auf der anderen Seite dieser Elementöffnung mit einer Schraubenmutter im Eingriff steht, wobei die nachfolgend auch als Einstellöffnung bezeichnete Durchgangsöffnung des Elements so dimensioniert ist, dass bei gelockerter Verschraubung eine Position des Elements bezüglich des Basiskörpers in einem durch diese Dimensionierung (im Zusammenspiel mit einem Schaft der Schraube) vorgegebenen Bereich lateral (parallel zur Plattenebene des Basiskörpers) einstellbar ist.

Bei der erfindungsgemäßen Lehre ist vorgesehen, dass jedes der Elemente die Form eines länglichen Streifens besitzt, wobei ein benachbart einem Längsende des Elements befindlicher erster Elementabschnitt flächig am Rand des Basiskörpers aufliegt, wohingegen ein benachbart dem anderen Längsende des Elements befindlicher zweiter Elementabschnitt vom Rand des Basiskörpers absteht.

Der Streifen kann z. B. in vielen Anwendungsfällen vorteilhaft eine Länge im Bereich von 2 cm bis 15 cm und eine Breite (Maximalbreite) im Bereich von 1 cm bis 3 cm besitzen. Eine Dicke des Streifens kann z. B. im Bereich von 0,5 mm bis 5 mm liegen.

Es können vorteilhaft Einstell- und Fixiermittel mit Ausgestaltungsdetails der vorstehend bereits erläuterten Art vorgesehen sein, insbesondere z. B. mit reibschlüssiger Fixierung des Elements und/oder beinhaltend eine Verschraubung des Elements. Gegebenenfalls sind letztere Maßnahmen bzw. eine derartige Gestaltung der Einstell- und Fixiermittel dann im Bereich des am Rand des Basiskörpers flächig (parallel zur Plattenebene) aufliegenden ersten Elementabschnitts vorgesehen, wohingegen mit dem vom Rand des Basiskörpers abstehenden zweiten Elementabschnitt vorteilhaft eine laterale "Herausverlegung" des zu verkörpernden Bezugsverlaufs aus dem Bereich des Basiskörpers realisiert sein kann.

Insbesondere kann bei einer Verwendung der Lehre der Bezugsverlauf durch die freien Enden der abstehenden zweiten Elementabschnitte definiert sein. Ein am zweiten Elementabschnitt befindliches freies Ende eines Elements kann z. B. ein in Breitenrichtung des Elements betrachtet verschmälertes Elementende darstellen (z. B. realisiert durch einen sich zum freien Ende hin verjüngenden zweiten Elementabschnitt). Insofern kann das freie Ende insbesondere z. B. als eine Spitze ausgebildet sein, um mit dieser Spitze einen visuell gut erkennbaren Bezugspunkt des verkörperten Bezugsverlaufs darzustellen.

In einer anderen nicht beanspruchten Ausführungsform besitzt der zweite Elementabschnitt eine im wesentlichen rechteckige Kontur, wobei das freie Ende z. B. geradlinig oder z. B. geringfügig gekrümmt verlaufen kann.

Im Hinblick auf eine möglichst genaue Verkörperung des Bezugsverlaufs ist es im allgemeinen von Vorteil, wenn die Elemente der entlang des Randes des Basiskörpers verlaufenden Reihe von Elementen mit möglichst geringem gegenseitigem Abstand angeordnet sind. Andererseits ist in vielen Anwendungsfällen die Einhaltung eines gewissen Mindestabstandes zwischen in der Reihe einander benachbarten Elementen vorteilhaft bzw. erforderlich, um die Elemente jeweils ohne räumliche Behinderung durch benachbarte Elemente in gewünschter Weise einstellen zu können.

Unter diesem Aspekt ist gemäß einer nicht beanspruchten Ausführungsform vorgesehen, dass in der Richtung entlang des Randverlaufs des Basiskörpers betrachtet, ein lichter Abstand zwischen jeweils zwei einander benachbarten der Elemente kleiner als jede Breite (also "Maximalbreite") dieser beiden Elemente ist. Dieser lichte Abstand ist bevorzugt kleiner als 50% jeder Breite der beiden Elemente. Bei der vorstehenden Bemessungsregel für den lichten Abstand sei angenommen, dass die Elemente alle in ihrer jeweiligen "Mittenstellung" angeordnet sind.

Die Elemente sind gemäß einer nicht beanspruchten Ausführungsform aus Kunststoff gebildet.

Die Elemente können z. B. einzeln als Formteile gefertigt sein. Abweichend davon kann z. B. eine Mehrzahl (z. B. wenigstens 5, insbesondere wenigstens 10) von einstückig zusammenhängend ausgebildeten Elementen gefertigt sein. Dies besitzt z. B. den Vorteil, dass eine ganze Reihe von Elementen gleichzeitig (z. B. im Kunststoffspritz- oder Vakuumgussverfahren) gefertigt und sodann gut handhabbar an einem Basiskörper montiert werden können, um die erfindungsgemäße Lehre auszubilden. Insbesondere diese letztere Fertigungsvariante ermöglicht eine einfache Realisierung der erfindungsgemäßen Maßnahme, wonach in der Reihe von Elementen die zweiten Elementabschnitte von einander benachbarten Elementen über elastische Stege miteinander verbunden sind.

Insbesondere kann bei der fertiggestellten Lehre zumindest ein Großteil von in der Reihe von Elementen einander paarweise benachbarten Elementen über elastische Stege miteinander verbunden sein. In einer Ausführungsform sind die elastischen Stege jeweils bogenförmig (z. B. "U-bogenförmig") zwischen den beiden benachbarten Elementen verlaufend vorgesehen (und liegen z. B. zusammen mit streifenförmig ausgebildeten Elementen in einer von den Elementen definierten gemeinsamen Ebene).

Durch eine derartige elastische Verbindung einander benachbarter Elemente kann abgesehen von damit einhergehenden Vorteilen bei der Fertigung bzw. Montage der Lehre in der Praxis oftmals auch die Einstellung bzw. Verstellung der Elemente zwecks Einstellung bzw. Verstellung des zu verkörpernden Bezugsverlaufs vereinfacht werden. Die "elastische Kopplung" der betreffenden Elemente in der Reihe von Elementen bewirkt für Elemente mit gelösten Einstell- und Fixiermitteln in gewisser Weise eine durch elastische Kräfte getriebene "Zentrierung" jedes Elements zwischen den beiderseits benachbarten Elementen. Für einen Benutzer vereinfacht dieser Effekt z. B. die Anordnung der betreffenden Elemente entlang einer "sanft gekrümmt verlaufenden" Linie (Bezugsverlauf).

Bei der erfindungsgemäßen Lehre sind die elastischen Stege vorteilhaft die ersten Elementabschnitte der beiden benachbarten Elemente verbindend vorgesehen, insbesondere z. B. bogenförmig verlaufend und/oder in der durch die ersten Elementabschnitte definierten Ebene verlaufend.

Gemäß eines weiteren Aspekts der Erfindung wird die eingangs gestellte Aufgabe durch ein Verfahren nach Anspruch 7 gelöst. Dieses Verfahren stellt eine vorteilhafte Verwendung einer Lehre der hier beschriebenen Art dar. Die Lehre kann hierbei z. B. verwendet werden, um einen tatsächlichen Verlauf eines an einer Fahrzeugtür montierten Türdichtungsprofils mit einem (durch die Lehre dargestellten) Sollverlauf des Türdichtungsprofils an der Fahrzeugtür zu vergleichen. Dieses Verfahren kann vorteilhaft zur Qualitätskontrolle eingesetzt werden.

Gemäß dieses weiteren Aspekts der Erfindung kann die Lehre alternativ auch z. B. verwendet werden, um ein Türdichtungsprofil mit einem (durch die Lehre dargestellten) Sollverlauf des Türdichtungsprofils an einer Fahrzeugtür zu montieren.

Wenngleich die vorstehenden Verwendungen für Türdichtungsprofile und Fahrzeugtüren im Rahmen der Erfindung besonders vorteilhafte und daher bevorzugte Verwendungen darstellen, so liegen im Rahmen der vorliegenden Erfindung auch abgewandelte Verfahren, bei denen anstatt der "Fahrzeugtür" eine andere ("erste") technische Einrichtung oder ("erste") Komponente und/oder anstatt des "Türdichtungsprofils" eine andere ("zweite") technische Einrichtung oder ("zweite") Komponente vorgesehen ist.

Es ist vorgesehen, dass das Positionieren der Lehre an der Fahrzeugtür (oder einer anderen Komponente) ein Anlegen wenigstens eines Anlageabschnitts des Basiskörpers an einer hierfür vorgesehenen Stelle der Fahrzeugtür (bzw. der anderen Komponente) beinhaltet.

Es ist weiterhin vorgesehen, dass der Basiskörper der Lehre wenigstens eine Ausrichtöffnung aufweist und das Positionieren der Lehre an der Fahrzeugtür (oder einer anderen Komponente) ein Anordnen der Ausrichtöffnung an einer hierfür vorgesehenen Stelle der Fahrzeugtür (bzw. der anderen Komponente) beinhaltet.

In einer nicht beanspruchten Ausführungsform des Verfahrens beinhaltet das Positionieren der Lehre ein Fixieren der Lehre an der Fahrzeugtür (oder einer anderen Komponente) durch Magnetkraft.

Die Erfindung wird nachfolgend anhand von Ausführungsbeispielen mit Bezug auf die beigefügten Zeichnungen weiter beschrieben. Es stellen dar:
- Fig. 1: eine perspektivische Ansicht einer Lehre, die nach herkömmlicher Art ausgebildet ist, in einer Verwendungssituation zum Prüfen einer Fahrzeugtür oder eines daran montierten Türdichtungsprofils auf Maßhaltigkeit,
- Fig. 2: eine perspektivische Teilansicht einer Lehre in einer der Fig. 1 entsprechenden Verwendungssituation gemäß eines Ausführungsbeispiels der Erfindung,
- Fig. 3: eine perspektivische Ansicht eines vergrößert dargestellten Teilbereiches der Lehre von Fig. 2,
- Fig. 4: eine Seitenansicht einer Reihe von Elementen der in den Fig. 2 und 3 dargestellten Lehre,
- Fig. 5: eine Draufsicht der Reihe von Elementen von Fig. 4,
- Fig. 6: eine Seitenansicht eines der in den Fig. 4 und 5 dargestellten Elemente, und
- Fig. 7: eine vergrößerte Schnittansicht des in Fig. 6 dargestellten Elements, im montierten Zustand.

Fig. 1 zeigt eine eingangs bereits beschriebene, nach herkömmlicher Art ausgebildete Lehre 1 in einer Verwendungssituation zum Prüfen einer Fahrzeugtür 2 bzw. eines daran montierten Türdichtungsprofils auf Maßhaltigkeit. Ein Rand 3 des plattenförmigen Lehrenkörpers, oder wenigstens ein Teil davon, verkörpert einen Bezugsverlauf der Lehre 1. Der z. B. identisch mit dem Verlauf des Randes 3 zu betrachtende Bezugsverlauf kann von einem Benutzer visuell mit einem an der Fahrzeugtür 2 ersichtlichen tatsächlichen Verlauf (z. B. eines Türdichtungsprofils) verglichen werden.

Nachfolgend wird mit Bezug auf die Fig. 2 bis 7 ein Ausführungsbeispiel einer erfindungsgemäßen Lehre 10 erläutert. Bei diesem Ausführungsbeispiel sei angenommen, dass die Lehre 10 dazu vorgesehen ist, in einer der Fig. 1 entsprechenden Situation an einer Fahrzeugtür 80 die Maßhaltigkeit eines Verlaufs eines an der Fahrzeugtür 80 durch eine Verklebung montierten Türdichtungsprofils 82 zu überprüfen.

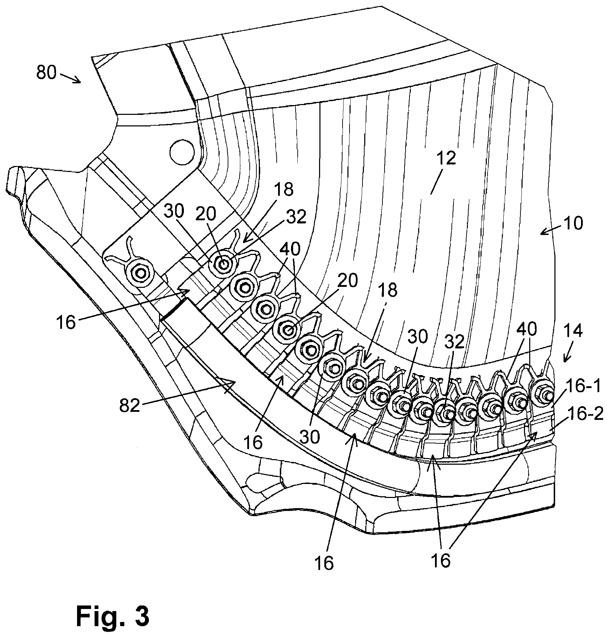

Fig. 2 ist eine perspektivische Ansicht eines Teilbereiches der Lehre 10 in dieser Verwendungssituation und Fig. 3 zeigt einen aus Fig. 2 herausvergrößerten Teilbereich.

Die Lehre 10 weist einen plattenförmigen Basiskörper 12 auf, der im dargestellten Beispiel als ein Faserverbundbauteil im Handlaminierverfahren hergestellt wurde. Ferner weist die Lehre 10 eine entlang eines Randes 14 des Basiskörpers 12 verlaufende Reihe von Elementen 16 auf (deren Positionen den von der Lehre 10 verkörperten Bezugsverlauf definieren). Ferner weist die Lehre 10 Einstell- und Fixiermittel 18 zum Einstellen der jeweiligen Positionen der Elemente 16 bezüglich des Basiskörpers 12 und zum jeweiligen Fixieren der Elemente 16 in ihrer eingestellten Position auf.

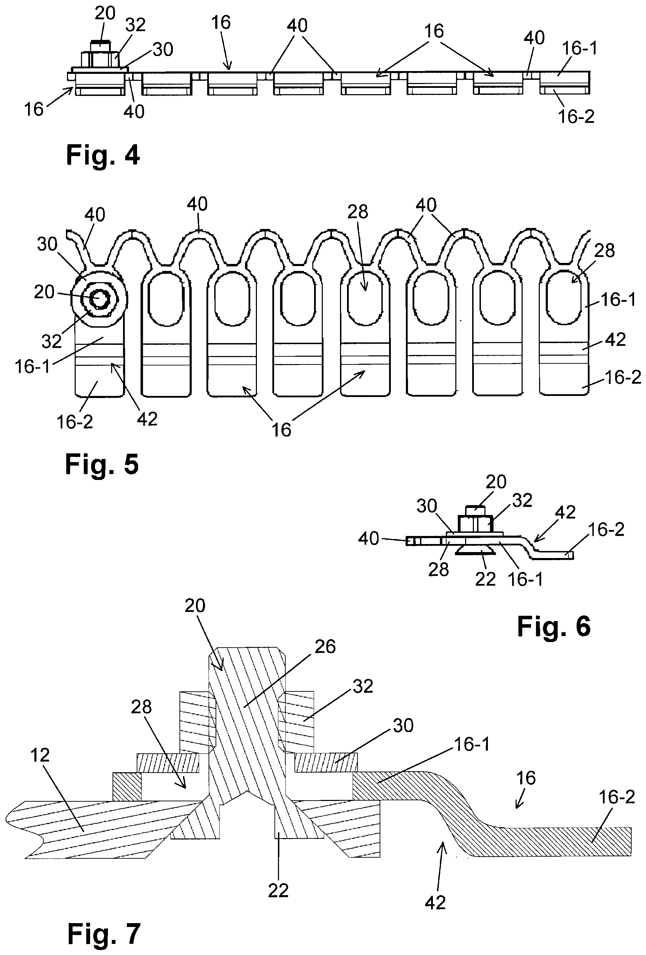

Die Fig. 4 und 5 zeigen isoliert einen Teil der Reihe von Elementen 16 der Lehre 10, wobei diese Elemente 16 im dargestellten Beispiel aus Kunststoff (z. B. PE) gebildet sind und jeweils die Form eines länglichen Streifens besitzen.

Ein benachbart einem (ersten) Längsende des Elements 16 befindlicher erster Elementabschnitt 16-1 liegt im montierten Zustand der Elemente 16 (vgl. Fig. 2 und 3) flächig am Rand 14 des Basiskörpers 12 auf, wohingegen ein benachbart dem anderen (zweiten) Längsende des Elements 16 befindlicher zweiter Elementabschnitt 16-2 in diesem montierten Zustand vom Rand 14 des Basiskörpers 12 absteht (am Rand 14 des Basiskörpers 12 übersteht).

Die Einstell- und Fixiermittel 18 sind im vorliegenden Beispiel dazu ausgebildet, bei jedem der Elemente 16 den ersten Elementabschnitt 16-1 flächig am Rand 14 des Basiskörpers 12 aufliegend orthogonal zur "Plattenebene" anzudrücken um das betreffende Element 16 somit reibschlüssig zu fixieren, wobei eine Andruckkraft verringert werden kann, um das betreffende Element 16 leichter einstellen bzw. verstellen zu können.

Die Einstell- und Fixiermittel 18 sind im dargestellten Beispiel an jedem der Elemente 16 gebildet durch eine die genannte Andruckkraft bereitstellende Verschraubung des betreffenden Elements 16 mit dem Basiskörper 12.

Zur Realisierung dieser Verschraubung ist für jedes Element 16 eine z. B. in den Fig. 4 und 5 am Element 16 ganz links eingezeichnete sowie in Fig. 6 ersichtliche Einstell- und Fixierschraube 20 vorgesehen, deren Schraubenachse im montierten Zustand orthogonal zu einer Plattenebene des Basiskörpers 12 im Bereich des betreffenden Elements 16 verläuft.

Wie es insbesondere in der vergrößerten Schnittansicht von Fig. 7 ersichtlich ist, weist die Schraube 20 einen Schraubenkopf 22 auf, der im dargestellten Beispiele als ein Senkkopf ausgebildet ist und vollständig versenkt in einer geeignet gesenkten Öffnung 24 des Basiskörpers 12 aufgenommen und gehalten wird, wobei ein sich daran anschließender mit Aussengewinde versehener zylindrischer Schaft 26 der Schraube 20 eine Öffnung 28 des ersten Elementabschnitts 16-1 des betreffenden Elements 16 durchsetzt und jenseits dieser Öffnung 28 unter Zwischenfügung einer Beilagscheibe 30 in eine Schraubenmutter 32 eingeschraubt ist.

Die Einstell- und Fixiermittel 18, die im dargestellten Beispiel also aus den Komponenten 20, 24, 28, 30, 32 an jedem der Elemente 16 gebildet sind, gestatten bei gelockerter Verschraubung das Einstellen der jeweiligen Position des Elements 16, und durch Festziehen der Verschraubung das jeweilige Fixieren des Elements 16 in dessen eingestellter Position.

In der gezeigten Ausführung ist der Schraubenkopf 22 wie auch die Öffnung 24 von runder Gestalt (z. B. konischer Senkkopf, aufgenommen in konischer Senkung). Abweichend davon kommt z. B. auch in Betracht, einen nicht-runden Schraubenkopf 22 (z. B. Sechskantkopf) vorzusehen und diesen in der hierzu korrespondierend formgestalteten Öffnung 24 formschlüssig gegen eine Verdrehung zu sichern.

Die Öffnung 28 jedes Elements 16 ist als ein in Längsrichtung des Elements 16 orientiertes Langloch ausgebildet, um eine Einstellbarkeit der Elemente 16 in deren Längsrichtung zu realisieren. Aufgrund der Orientierung der Längsrichtungen der Elemente 16 im wesentlichen orthogonal zum Verlauf des Randes 14 des Basiskörpers 12 an den betreffenden Stellen ist diese Einstellbarkeit gleichbedeutend mit einer Einstellbarkeit desjenigen Ausmaßes, in welchem das jeweilige Element 16 vom Rand 14 absteht. Da im dargestellten Beispiel der von der Lehre 10 verkörperte Bezugsverlauf beispielsweise durch diejenige gedachte Linie repräsentiert wird, welche "an den freien Enden der abstehenden Elementabschnitte 16-2" entlang verläuft, kann mit entsprechender Verstellung der Elemente 16 auch der Bezugsverlauf der Lehre 10 geändert werden.

Wenn also beispielsweise im Hinblick auf die in Fig. 2 dargestellte Verwendung der Lehre 10, sei es z. B. in einem Entwicklungsstadium der Fahrzeugtür 80 oder im Laufe der späteren Produktion der Fahrzeugtür 80, der konkrete "Sollverlauf" des Türdichtungsprofils 82 verändert wird, so kann zur Überprüfung der Maßhaltigkeit der geänderten Konstruktion vorteilhaft weiterhin dieselbe Lehre 10 zum Einsatz kommen, nachdem die von der Änderung betroffenen Elemente 16 entsprechend verstellt wurden.

Insbesondere im Anwendungsfall gemäß Fig. 2, aber auch in anderen Anwendungen, ist es im Rahmen der Erfindung von Vorteil, wenn in der Reihe von Elementen 16 einander benachbarte Elemente 16 über elastische Stege miteinander verbunden sind, wie dies im dargestellten Beispiel z. B. in Fig. 5 gut ersichtlich ist. Die Stege sind in Fig. 5 mit 40 bezeichnet und verlaufen im dargestellten Beispiel jeweils U-bogenförmig zwischen den beiderseits davon befindlichen Elementen 16, wobei jede U-Bogenform in einer durch die ersten Elementabschnitte 16-1 definierten Ebene liegt. Bevorzugt, wie dargestellt, ist hierbei der "Bogengrund" zu der dem Rand 14 des Basiskörpers 12 abgewandten Seite der Elemente 16 hin orientiert und/oder sind die "Bogenschenkel bzw. -enden" jeweils im Bereich von auf dieser Seite befindlichen Enden der streifenförmigen Elemente 16 an denselben angebunden (hier: z. B. einstückig angeformt).

Abgesehen davon, dass derart miteinander verbundene Elemente 16 bei der Montage der Lehre 10 besonders gut handhabbar sind, vereinfacht dies für einen Benutzer oftmals in gewissem Maße eine Veränderung des zu verkörpernden Bezugsverlaufs. Insbesondere im Anwendungsfall gemäß Fig. 2, aber auch in anderen Anwendungen, bei denen der zu verkörpernde Bezugsverlauf in einer in orthogonal zur Plattenebene des Basiskörpers 12 betrachtet bestimmten "Höhe" festgelegt werden soll, ist im Rahmen der Erfindung eine Maßnahme vorteilhaft, die auch im dargestellten Beispiel vorgesehen ist, nämlich eine Kröpfung der zweiten Elementabschnitte 16-2 der Elemente 16. Diese Kröpfung ist z. B. gut in den Fig. 6 und 7 zu erkennen und mit 42 bezeichnet.

Wie bereits erläutert kann die Lehre 10 wie in Fig. 2 dargestellt von einem Benutzer verwendet werden, um visuell einen Istverlauf des Türdichtungsprofils 82, hier z. B. den Verlauf des in Fig. 2 oberen ("inneren") Randes des Türdichtungsprofils 82 mit einem hierfür vorab festgelegten Sollverlauf zu vergleichen, wobei der Sollverlauf z. B. der in der beschriebenen Weise von der Lehre 10 verkörperte Bezugsverlauf sein kann. In diesem Fall wird zur Prüfung der Tür 80 vom Benutzer visuell kontrolliert, ob nach Positionierung der Lehre 10 die freien Enden der Elementabschnitte 16-2 sämtlicher Elemente 16 den besagten Dichtungsprofilrand "gerade berühren", oder ob es irgendwelche Abweichungen zwischen dem Sollverlauf und dem Istverlauf gibt. In der Praxis zweckmäßig kann es jedoch auch sein, wenn der von der Lehre 10 darzustellende Sollverlauf ein Verlauf ist, der (definitionsgemäß) in einem zweckmäßigerweise relativ kleinen, vorbestimmten einheitlichen Abstand (z. B. 1 mm oder 2 mm) von dem durch die freien Enden der Elemente 16 unmittelbar definierten Bezugsverlauf beabstandet ist. Ein solcher Abstand besitzt z. B. auch den Vorteil, dass nach visueller Feststellung einer Maßabweichung diese Maßabweichung durch Ausmessen des "Spaltes" zwischen den Elementen und dem Dichtungsprofilrand quantifiziert werden kann.

Neben der Verwendung der Lehre 10 als eine "Prüflehre" zum Überprüfen einer technischen Einrichtung oder Komponente wie der hier beispielhaft gezeigten Fahrzeugtür 80 bzw. einer daran montierten Komponente wie dem hier gezeigten Türdichtungsprofil 82, kann die Lehre 10 vorteilhaft auch als "Montagelehre" im Rahmen einer Montage des Türdichtungsprofils 82 (oder einer anderen Komponente) an der Fahrzeugtür 80 (oder einer anderen Komponente) eingesetzt werden. Zu diesem Zweck kann die Lehre 10 an der betreffenden Einrichtung bzw. Komponente positioniert werden, um sodann die weitere Komponente (im Beispiel ein Dichtungsprofil) entlang des von der Lehre 10 verkörperten Bezugsverlaufs zu montieren. Bei dieser Verwendung der Lehre 10 kann das Türdichtungsprofil 82 z. B. sukzessive, unter sukzessiver Anlage an den freien Enden der Elementabschnitte 16-2 der Elemente 16, an der Tür 80 aufgeklebt werden.

## Patentansprüche

1. Lehre (10) zur Verkörperung eines Bezugsverlaufs, aufweisend:
- einen plattenförmigen Basiskörper (12),
- eine entlang eines Randes (14) des Basiskörpers (12) verlaufende Reihe von Elementen (16), deren Positionen einen von der Lehre (10) verkörperten Bezugsverlauf definieren, wobei jedes der Elemente (16) die Form eines länglichen Streifens besitzt und ein benachbart einem Längsende des Elements (16) befindlicher erster Elementabschnitt (16-1) flächig am Rand (14) des Basiskörpers (12) aufliegt, wohingegen ein benachbart dem anderen Längsende des Elements (16) befindlicher zweiter Elementabschnitt (16-2) vom Rand (14) des Basiskörpers (12) absteht,
- Einstell- und Fixiermittel (18) zum Einstellen der jeweiligen Positionen der Elemente (16) bezüglich des Basiskörpers (12) und zum jeweiligen Fixieren der Elemente (16) in ihrer eingestellten Position,
**dadurch gekennzeichnet, dass** in der Reihe von Elementen (16) die ersten Elementabschnitte (16-1) von einander benachbarten Elementen (16) über elastische Stege (40) miteinander verbunden sind.

2. Lehre (10) nach Anspruch 1, wobei die Einstell- und Fixiermittel (18) dazu ausgebildet sind, bei jedem der Elemente (16) einen Elementabschnitt (16-1) flächig am Rand (14) des Basiskörpers (12) aufliegend anzudrücken, um das betreffende Element (16) somit reibschlüssig zu fixieren.

3. Lehre (10) nach einem der vorangehenden Ansprüche, wobei die Einstell- und Fixiermittel (18) an jedem der Elemente (16) eine Verschraubung (20,32) des betreffenden Elements (16) mit dem Basiskörper (12) beinhalten.

4. Lehre (10) nach einem der vorangehenden Ansprüche, wobei die elastischen Stege (40) bogenförmig verlaufen.

5. Lehre (10) nach einem der vorangehenden Ansprüche, wobei die elastischen Stege (40) in der durch die ersten Elementabschnitte (16-1) definierten Ebene verlaufen.

6. Lehre (10) nach einem der vorangehenden Ansprüche, wobei der Basiskörper (12) uneben ist.

7. Verfahren zum Montieren einer Komponente mit einem Sollverlauf der Komponente an einer technischen Einrichtung oder zum Vergleichen eines tatsächlichen Verlaufs einer an einer technischen Einrichtung montierten Komponente mit einem Sollverlauf der Komponente an der technischen Einrichtung, umfassend die Schritte:
- Bereitstellen einer Lehre (10) nach einem der Ansprüche 1 bis 6, bei welcher die jeweiligen Positionen der Elemente (16) bezüglich des Basiskörpers (12) eingestellt und die Elemente (16) jeweils in ihrer eingestellten Position fixiert wurden, derart, dass die Positionen der Elemente (16) den Sollverlauf der Komponente darstellen,
- Positionieren der Lehre (10) an der technischen Einrichtung und sukzessives Befestigen der Komponente an der technischen Einrichtung entlang des von den Elementen (16) dargestellten Sollverlaufs der Komponente (82) bzw. visuelles Vergleichen des tatsächlichen Verlaufs der Komponente (82) mit dem von den Elementen (16) dargestellten Sollverlauf der Komponente.

8. Verfahren nach Anspruch 7, wobei das Positionieren der Lehre (10) an der technischen Einrichtung ein Anlegen wenigstens eines Anlageabschnitts des Basiskörpers (12) an einer hierfür vorgesehenen Stelle der technischen Einrichtung beinhaltet.

9. Verfahren nach einem der Ansprüche 7 bis 8, wobei der Basiskörper (12) der Lehre (10) wenigstens eine Ausrichtöffnung aufweist und das Positionieren der Lehre (10) an der technischen Einrichtung ein Anordnen der Ausrichtöffnung an einer hierfür vorgesehenen Stelle der technischen Einrichtung beinhaltet.

10. Verfahren nach einem der Ansprüche 7 bis 9, wobei das Positionieren der Lehre (10) ein Fixieren der Lehre (10) an der technischen Einrichtung durch Magnetkraft beinhaltet.

11. Verfahren nach einem der Ansprüche 7 bis 10, wobei die technische Einrichtung eine Fahrzeugtür (80) und die Komponente ein Türdichtungsprofil (82) ist.

## Claims

1. A template (10) for representing a reference curve, comprising:
- a plate-shaped base body (12),
- a row of elements (16) extending along an edge (14) of the base body (12) whose positions define a reference curve represented by the template (10), wherein each of the elements (16) has the form of an elongated strip and a first element portion (16-1) located adjacent to a longitudinal end of the element (16) rests flat against the edge (14) of the base body (12), whereas a second element portion (16-2) located adjacent the other longitudinal end of the element (16) protrudes from the edge (14) of the base body (12),
- adjusting and fixing means (18) for adjusting the respective positions of the elements (16) with respect to the base body (12) and for respectively fixing the elements (16) in their adjusted position,
**characterized in that** in the row of elements (16) the first element portions (16-1) of elements (16) adjacent to each other are connected to each other via elastic webs (40).

2. The template (10) according to claim 1, wherein the adjusting and fixing means (18) are designed to press an element portion (16-1) at each of the elements (16) flat at the edge (14) of the base body (12) and thus to frictionally fix the respective element (16).

3. The template (10) according to any one of the preceding claims, wherein the adjusting and fixing means (18) at each of the elements (16) include a screw connection (20,32) of the respective element (16) with the base body (12).

4. The template (10) according to any one of the preceding claims, wherein the elastic webs (40) extend arcuately.

5. The template (10) according to any one of the preceding claims, wherein the elastic webs (40) extend in the plane defined by the first element portions (16-1).

6. The template (10) according to any one of the preceding claims, wherein the base body (12) is uneven.

7. A method for mounting a component with a desired course of the component at a technical device or for comparing an actual course of a component mounted at a technical device with a desired course of the component at the technical device, comprising the steps:
- providing a template (10) according to any one of claims 1 to 6, wherein the respective positions of the elements (16) with respect to the base body (12) are adjusted and the elements (16) were fixed in each case in its adjusted position, such that the positions of the elements (16) represent the desired course of the component,
- positioning of the template (10) at the technical device and successive fastening of the component to the technical device along the desired course of the component (82) represented by the elements (16) or visually comparing the actual course of the component (82) with that of the desired course of the component shown by the elements (16), respectively.

8. The method according to claim 7, wherein the positioning of the template (10) at the technical device includes applying at least one abutting portion of the base body (12) at a designated location of the technical device.

9. The method according to any one of claims 7 to 8, wherein the base body (12) of the template (10) has at least one alignment opening and the positioning of the template (10) at the technical device includes arranging the alignment opening at a designated location of the technical device.

10. The method according to any one of claims 7 to 9, wherein the positioning of the template (10) includes fixing the template (10) at the technical device by magnetic force.

11. The method according to any one of claims 7 to 10, wherein the technical device is a vehicle door (80) and the component is a door seal profile (82).

## Revendications

1. Gabarit (10) permettant la représentation d'une courbe de référence, présentant :
- un corps de base (12) en forme de plaque,
- une rangée d'éléments (16) passant le long d'un bord (14) du corps de base (12), dont les positions définissent une courbe de référence représentée par le gabarit (10), dans lequel chacun des éléments (16) a la forme d'une bande longitudinale et un premier tronçon d'élément (16-1) se trouvant dans le voisinage d'une extrémité longitudinale de l'élément (16) repose à plat sur le bord (14) du corps de base (12), tandis qu'un second tronçon d'élément (16-2) se trouvant dans le voisinage de l'autre extrémité longitudinale de l'élément (16) fait saillie du bord (14) du corps de base (12),
- des moyens de réglage et de fixation (18) pour régler les positions respectives des éléments (16) par rapport au corps de base (12) et pour la fixation respective des éléments (16) dans leur position réglée,
**caractérisé en ce que** dans la rangée d'éléments (16), les premiers tronçons (16-1) d'éléments (16) voisins l'un de l'autre sont reliés entre eux par le biais de traverses élastiques (40).

2. Gabarit (10) selon la revendication 1, dans lequel les moyens de réglage et de fixation (18) sont conçus pour, à chacun des éléments (16), appuyer un tronçon d'élément (16-1) à plat sur le bord (14) du corps de base (12) pour fixer l'élément (16) concerné en engagement par friction de cette façon.

3. Gabarit (10) selon l'une des revendications précédentes, dans lequel les moyens de réglage et de fixation (18) contiennent sur chacun des éléments (16), un vissage (20, 32) de l'élément (16) concerné avec le corps de base (12).

4. Gabarit (10) selon l'une des revendications précédentes, dans lequel les traverses élastiques (40) sont arquées.

5. Gabarit (10) selon l'une des revendications précédentes, dans lequel les traverses élastiques (40) passent dans le plan défini par les premiers tronçons d'élément (16-1).

6. Gabarit (10) selon l'une des revendications précédentes, dans lequel le corps de base (12) est irrégulier.

7. Procédé de montage d'une composante avec une courbe nominale de la composante sur un dispositif technique ou de comparaison d'une courbe réelle d'une composante montée sur un dispositif technique à une courbe nominale de la composante sur le dispositif technique, comprenant les étapes suivantes :
- fourniture d'un gabarit (10) selon l'une des revendications 1 à 6, dans lequel les positions respectives des éléments (16) par rapport au corps de base (12) sont réglées et les éléments (16) ont été fixés respectivement dans leur position réglée de telle sorte que les positions des éléments (16) représentent la courbe nominale de la composante,
- positionnement du gabarit (10) sur le dispositif technique et fixation successive de la composante sur le dispositif technique le long de la courbe nominale de la composante (82) représentée par les éléments (16), respectivement, comparaison visuelle de la courbe réelle de la composante (82) avec la courbe nominale de la composante représentée par les éléments (16).

8. Procédé selon la revendication 7, dans lequel le positionnement du gabarit (10) sur le dispositif technique contient un placement d'au moins un tronçon de placement du corps de base (12) contre un emplacement du dispositif technique prévu pour cela.

9. Procédé selon l'une des revendications 7 à 8, dans lequel le corps de base (12) du gabarit (10) présente au moins une ouverture d'alignement et le positionnement du gabarit (10) sur le dispositif technique contient un agencement de l'ouverture d'alignement contre un emplacement du dispositif technique prévu pour cela.

10. Procédé selon l'une des revendications 7 à 9, dans lequel le positionnement du gabarit (10) contient une fixation du gabarit (10) sur le dispositif technique par la force magnétique.

11. Procédé selon l'une des revendications 7 à 10, dans lequel le dispositif technique est une porte de véhicule (80) et la composante est un profilé de joint de porte (82).
